# EUROPÄISCHE PATENTSCHRIFT

(11) **EP 1 232 823 B1**
(45) Veröffentlichungstag und Bekanntmachung des Hinweises auf die Patenterteilung: **04.04.2007**
(21) Anmeldenummer: 02003677.8
(22) Anmeldetag: 18.02.2002
(51) Int. Cl.: B23H 9/00, B23H 1/00

(54) **Verfahren zum Herstellen von Mikrostrukturen sowie zugehörige Verwendung**
Method for producing microstructures and the corresponding use
Procédé de fabrication de microstructures et l'utilisation correspondante

(30) Priorität: 20.02.2001 DE 10108074
(43) Veröffentlichungstag der Anmeldung: 21.08.2002
(73) Patentinhaber: Infineon Technologies AG, 81669 München (DE)
(72) Erfinder: Ehben, Thomas, 81379 München (DE); Reznik, Daniel, Dr., 13465 Berlin (DE)
(74) Vertreter: Kindermann, Peter

(56) Entgegenhaltungen:
- US-A- 4 131 524
- US-A- 5 429 984
- US-A- 6 124 632
- PATENT ABSTRACTS OF JAPAN Bd. 2000, Nr. 10, 17. November 2000 (2000-11-17) & JP 2000 202718 A (MATSUSHITA ELECTRIC IND CO LTD), 25. Juli 2000 (2000-07-25)
- REYNAERTS D ET AL: "Machining of three-dimensional microstructures in silicon by electro-discharge machining" SENSORS AND ACTUATORS A, ELSEVIER SEQUOIA S.A., LAUSANNE, CH, Bd. 67, Nr. 1-3, 15. Mai 1998 (1998-05-15), Seiten 159-165, XP004130129 ISSN: 0924-4247

## Beschreibung

Die Erfindung betrifft ein Verfahren zum Herstellen einer Mikrostruktur nach dem Oberbegriffs des Anspruchs 1. Ein solches Verfahren ist aus US4131524 bekannt. Bei dem Verfahren wird aus einem Werkstück auf Siliziumbasis mindestens ein Bereich abgetragen.

Die Erfindung betrifft auch eine Verwendung des Verfahrens.

Mikrostrukturen sind Strukturen, deren Abmessungen im Mikrometerbereich liegen, d.h. beispielsweise mit Abmessungen kleiner als 100 µm, kleiner als 10 µm oder kleiner als 1 µm, jedoch größer als 0,5 µm. Zur Herstellung von Mikrostrukturen wird vor allem Silizium eingesetzt, da aus der langen Historie der Halbleitertechnik verschiedene Verfahren seiner Verarbeitung beherrscht werden und seine Eigenschaften weitgehend bekannt sind. Zur Strukturierung des Siliziums werden üblicherweise Ätztechniken eingesetzt, bei denen Ätzmasken verwendet werden. Das strukturierte Silizium wird mit anderen Systemkomponenten zu vollständigen mikromechanischen Bauelementen zusammengefügt. Die üblicherweise zur Strukturierung von Silizium eingesetzten Trocken- und Plasmaätzverfahren sind vergleichsweise teuer und aufwendig.

Die US 4,131,524 betrifft die Herstellung eines Drucksensors bzw. eines Beschleunigungssensors in Silizium mit Hilfe eines funkenerosiven Verfahrens. Die JP 2000202718 betrifft die Herstellung von Strukturen mit hohem Aspektverhältnis mit Hilfe eines funkenerosiven Verfahrens. Die US 5,429,984 betrifft die Herstellung eines Beschleunigungssensors, eines Motors bzw. eines Drucksensorarrays in Silizium mit Hilfe von funkenerosiven Verfahren.

D. Reynaerts u.a , "Machining of three-dimensional microstructures in silicon by electro-discharge machining", Sensors and Actuators A 67 (1998), pages 159 to 165, betrifft allgemein funkenerosive Verfahren und insbesondere die Herstellung von Zahnrädern und eines Beschleunigungssensors. Die US 6,124,632 betrifft die Herstellung eines Masseflussreglers, wobei eine Einlasskanal bzw. ein Auslasskanal in einem Pyrexglaschip hergestellt werden durch einen Laser und Funkenentladungsprozess.

Es ist Aufgabe der Erfindung, zum Herstellen einer Mikrostruktur ein einfaches Verfahren anzugeben, mit dessen Hilfe die Mikrostruktur insbesondere mit geringem Aufwand an Zeit, Material und auch an Kosten hergestellt werden kann. Außerdem soll eine Verwendung des Verfahrens angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Bei einer ersten Alternative des erfindungsgemäßen Verfahrens wird zum Abtragen des Bereiches ein funkenerosives Verfahren eingesetzt. Bisher wird das funkenerosive Abtragen nur in der Metallbearbeitung eingesetzt. Jedoch lassen sich die aus der Metallbearbeitung bekannten Technologien zum funkenerosiven Abtragen überraschender Weise auch auf halbleitendes Material anwenden, z.B. auf Silizium, Germanium oder einen Verbindungshalbleiter wie Galliumarsenid. Zur Strukturierung des Siliziums lässt sich das funkenerosive Senken oder das funkenerosive Schneiden nutzen. Bei beiden Verfahren wird eine Elektrode zum selektiven Abtragen vorgegebener Bereiche verwendet. Das Verwenden einer Ätzmaske für jeden Abtragungsvorgang ist nicht mehr erforderlich.

Beim funkenerosiven Abtragen wird eine Werkzeugelektrode dem Werkstück auf Halbleiterbasis bis auf einen kleinen Abstand genähert. Zwischen Werkstück und Werkzeugelektrode bildet sich ein Funkenspalt. Ein elektrischer Generator erzeugt eine pulsierende Gleichspannung von beispielsweise 20 Volt. Es lassen sich jedoch auch andere Gleichspannungen im Bereich zwischen 20 und 150 Volt nutzen. Die pulsierende Gleichspannung wird einerseits an die Werkzeugelektrode und andererseits an das Werkstück angelegt. Zwischen der Werkzeugelektrode und dem als Gegenelektrode dienenden Werkstück befindet sich eine elektrisch nicht-leitende Flüssigkeit, die auch als Dielektrikum bezeichnet wird. An der engsten Stelle des Funkenspaltes sammeln sich unter der Wirkung des elektrischen Feldes Ionen und Werkstoffteilchen, die in einem Entladungskanal zu einem Funkenüberschlag führen. Der Entladungsstrom steigt bis auf einen einstellbaren Höchstwert von beispielsweise einigen Ampere an. Im Entladungskanal entstehen Temperaturen von über 1000°C, die zum Schmelzen und Verdampfen von Siliziumteilchen führen.

Bei Impulsende bricht der Entladungskanal zusammen. Dadurch werden Halbleiterteilchen herausgeschleudert. Jeder einzelne Funke erzeugt also im Werkstück eine kleine kraterförmige Vertiefung. Die Strukturierung des Werkstücks ist das Ergebnis einer Vielzahl dieser Vertiefungen.

Der Generator erzeugt eine Folge von Impulsen und Impulspausen, beispielsweise im Mikrosekundenbereich. So werden beispielsweise Impulse mit 300 Mikrosekunden Länge eingesetzt, zwischen denen Pausen von 100 Mikrosekunden liegen. Die Werte für die Spannung U, die Stromstärke I, die Impulsdauer ti und die Impulspause t0 sind einstellbar und werden meist durch ein Programm geregelt. Durch höhere Stromstärken und längere Impulse lässt sich die Abtragmenge vergrößern. Bei kleineren Stromstärken und kürzeren Impulsen ist jedoch die Oberflächengüte der im Silizium erzeugten Struktur größer.

Der Funkenspalt ist der Zwischenraum zwischen Werkzeugelektrode und Werkstück. Je kleiner der Funkenspalt ist, desto größer sind die Abtragleistung und die Abbildungsgenauigkeit der Form der Werkzeugelektrode im Werkstück. Die Größe des Funkenspaltes wird durch eine Vorschubregelung in Abhängigkeit von der Zündspannung konstant gehalten. Typische Vorschubgeschwindigkeiten liegen bei einigen Mikrometern pro Minute. Je nach gewünschter Abtragleistung und Oberflächengüte beträgt der Funkenspalt beispielsweise 0,03 mm bis 0,1 mm.

Als Dielektrikum werden u.a. Mineralöle oder synthetische Kohlenwasserstoffe eingesetzt. Beim funkenerosiven Schneiden wird als Dielektrikum auch entsalztes Wasser verwendet. Abtrag, Zersetzungsprodukte und die entstehende Wärme sollten vom Dielektrikum abgeführt werden. Daher wird bei einer Ausgestaltung eine intensive Spülung, Filterung, Kühlung und regelmäßige Erneuerung des Dielektrikums gewährleistet. Beispielsweise wird das Dielektrikum durch den Funkenspalt mit einem Druck gepresst, der so bemessen ist, dass einerseits Rückstände sicher entfernt werden und dass andererseits die auf dem Silizium ausgebildeten Strukturen nicht beschädigt werden.

Bei einer anderen Alternative des erfindungsgemäßen Verfahrens wird zum Abtragen des Bereiches ein elektrochemisches Formabtrageverfahren eingesetzt. Beim elektrochemischen Formabtragen wird ebenfalls eine Werkzeugelektrode mit regelbarem Vorschub genutzt. Das Werkstück aus Silizium wird an den Pluspol einer regelbaren Gleichspannungsquelle von beispielsweise 5 bis 20 Volt angeschlossen. Es sind Stromerzeuger im Einsatz, mit denen sich Stromdichten im Bereich einiger Ampere pro cm² erzeugen lassen. Als Elektrolyt wird beispielsweise Flusssäure bzw. Fluorwasserstoff HF eingesetzt. Es werden Vorschubgeschwindigkeiten von einigen µm pro Minute erreicht. Der Elektrolyt wird unter Druck durch den Arbeitsspalt gepumpt.

Bei einer Weiterbildung des funkenerosiven Verfahrens oder des elektrochemischen Formabtragungsverfahrens wird ein Senkverfahren eingesetzt, bei dem eine Werkzeugelektrode in das Werkstück hineingesenkt wird. Beim funkenerosiven Verfahren wird der Abstand zwischen dem Werkstück und der Werkzeugelektrode beim Absenken zyklisch verändert.

Bei einer anderen Weiterbildung wird eine Werkzeugelektrode mit einer Form benutzt, deren Abmessungen die Abmessungen des abzutragenden Bereiches vorgeben und die Werkstückform bestimmen. Die Form der Werkzeugelektrode entspricht der Form des bearbeiteten Werkstücks. Strukturelement an einer bestimmten Stelle der Werkzeugelektrode finden sich bei gleichem Bezugssystem an der gleichen Stelle auf dem Werkstück wieder. Die Formen der Werkzeugelektrode werden am Werkstück invertiert, d.h. aus einem Hohlraum an der Werkzeugelektrode wird ein Vorsprung im Werkstück und aus einem Vorsprung an der Werkzeugelektrode wird ein Hohlraum im Werkstück. Werkzeugelektroden mit Abmessungen im Mikrometerbereich lassen sich mit Hilfe von Ätzprozessen fertigen. Zum Aufbringen der Ätzmaske sind die aus der Halbleitertechnologie bekannten Verfahren geeignet. Der Ätzprozess muss pro Werkzeugelektrode nur einmal ausgeführt werden. Anschließend lässt sich die Werkzeugelektrode zum Herstellen einer Vielzahl von Werkstücken einsetzen. Zum Strukturieren der einzelnen Werkstücke sind keine weiteren Ätzschritte mehr erforderlich.

Bei einer anderen Weiterbildung enthält die Werkzeugelektrode mindestens einen Hohlraum, der einen nicht-abzutragenden mindestens einen Bereich vorgibt. Durch das Verwenden von Werkzeugelektroden mit einer Strukturierung lassen sich zusätzliche Bewegungen von Werkzeugelektrode oder Werkstück während des Absenkens der Werkzeugelektrode auch bei einer über einfache geometrische Grundkörper hinausgehende Strukturierung vermeiden.

Bei einer anderen Weiterbildung enthält die Elektrode Graphit, einen nicht-rostenden Stahl, Kupfer oder eine Kupferlegierung. Durch geeignete Materialwahl der Werkzeugelektrode lässt sich der Verschleiß der Elektrode beim Abtrageverfahren verringern, insbesondere beim funkenerosiven Abtragen.

Bei einer anderen Weiterbildung der erfindungsgemäßen Verfahren ist Halbleitermaterial, z.B. das Silizium, aus dem das Werkstücks besteht, dotiert. Das Werkstück besteht beispielsweise aus hochreinem, einkristallinem Silizium mit einer Leitfähigkeit von 0,025 Ω cm, d.h. mit einer Leitfähigkeit im niederohmigen Bereich. Solche Siliziummaterialien sind übliche Ausgangsprodukte für die Herstellung integrierter Schaltkreise und somit leicht und damit preiswert erhältlich.

Bei einer anderen Weiterbildung ist das Werkstück eine Halbleiterscheibe, auf der gleichzeitig eine Vielzahl gleicher Strukturen erzeugt werden, beispielsweise mehr als hundert. Beim Senken wird die Werkzeugelektrode entlang der Normalenrichtung der zu strukturierenden Oberfläche der Halbleiterscheibe bewegt. Beim Schneiden wird beispielsweise ein Runddraht sowohl in Normalenrichtung als auch in einer quer zur Normalenrichtung liegenden Richtung bewegt.

Das Bauelement zur Analyse enthält eine Schicht auf Halbleiterbasis, z.B. auf Siliziumbasis, die mit Hilfe des funkenerosiven oder des elektrochemischen Verfahrens strukturiert worden ist. Über der Schicht auf Siliziumbasis und/oder unterhalb dieser Schicht befindet sich eine Abdeckschicht, welche Seitenwände der Kanäle bildet. Die Abdeckschicht besteht beispielsweise aus Glas.

Im Folgenden werden Ausführungsbeispiele der Erfindung an Hand der beiliegenden Zeichnungen erläutert. Darin zeigen:
- Figur 1: das Prinzip einer Funkenerosionsanlage,
- Figur 2: ein mit Hilfe der Funkenerosionsanlage strukturiertes Werkstück,
- Figur 3: ein Bauelement zur Analyse von Flüssigkeiten, und
- Figur 4: das Prinzip einer Anlage zum elektrochemischen Formabtragen.

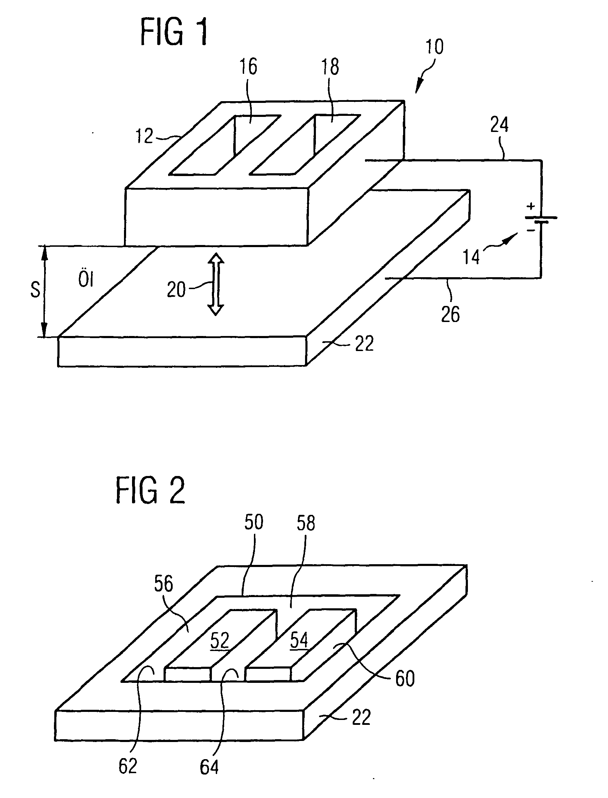

Figur 1 zeigt das Prinzip einer Funkenerosionsanlage 10, die eine Werkzeugelektrode 12 und eine Steuerung 14 mit Generator enthält. Die Steuerung 14 und der Generator werden durch eine Spannungsquelle dargestellt. Die Werkzeugelektrode 12 besteht aus Kupfer und ist quaderförmig. In der Werkzeugelektrode 12 befinden sich zwei quaderförmige Durchbrüche 16, 18, die die gleiche Form haben und die parallel zueinander liegen. Aufgrund der Durchbrüche 16 und 18 hat die Werkzeugelektrode 12 die Form eines E-I-Kernes, wie er bei elektrischen Spulen bekannt ist. Die Länge der Werkzeügelektrode 12 beträgt beispielsweise 2 µm. Die Breite beträgt beispielsweise 3 µm. Die Werkzeugelektrode 12 lässt sich mit Hilfe einer nicht dargestellten Vorschubeinrichtung in vertikaler Richtung 20 nach oben oder nach unten bewegen.

Eine Siliziumscheibe 22, die auch als Wafer bezeichnet wird, ruht auf einem nicht dargestellten Werkzeugtisch der Funkenerosionsanlage 10. Von der Steuerung 14 führt eine Leitung 24 zur Werkzeugelektrode 12 und eine Leitung 26 zur Siliziumscheibe 22. Die Leitung 24 dient zum Führen eines positiven Potentials, und die Leitung 26 zum Führen eines negativen Potentials.

Zwischen der Werkzeugelektrode 12 und der Siliziumscheibe 22 befindet sich als Dielektrikum ein Öl, das in einem nicht dargestellten Ölkreislauf der Funkenerosionsanlage 10 geführt wird. Der Ölkreislauf enthält einen Vorratsbehälter für das Öl, eine Ölpumpe, einen Ölfilter und eine Ölkühlung.

Beim Betrieb der Funkenerosionsanlage 10 wird durch die Steuerung 14 eine pulsierende Gleichspannung erzeugt, die einen pulsierenden Gleichstrom zwischen Werkzeugelektrode 12 und Siliziumscheibe 22 zur Folge hat. Ein Funkenspalt S wird durch die Vorschubeinrichtung der Funkenerosionsanlage 10 in seiner Spaltbreite geregelt. Die Werkzeugelektrode 12 wird der Siliziumscheibe 22 zyklisch genähert und wieder um eine geringe Distanz entfernt. Dadurch kommt es zwischen der Werkzeugelektrode 12 und der Siliziumscheibe 22 zu periodischen elektrischen Entladungen, die einen selektiven Abtrag einzelner Bereiche der Siliziumscheibe 22 zur Folge haben. Die Spaltbreite variiert beispielsweise im Bereich von 0,03 mm bis 0,3 mm.

Figur 2 zeigt die mit Hilfe der Funkenerosionsanlage 10 bearbeitete Halbleiterscheibe 22. Durch die Werkzeugelektrode 12 wurde Silizium innerhalb einer quaderförmigen Aussparung 50 aus der Siliziumscheibe 22 entfernt. An den Stellen, die den Durchbrüchen 16, 18 gegenüberlagen, sind zwei quaderförmige Inseln 52 und 54 entstanden. Die quaderförmigen Inseln 52 und 54 liegen parallel zueinander und sind von Kanälen 56 bis 64 umgeben, wobei der Kanal 64 zwischen den Inseln 52 und 54 liegt und in einen oberen Kanal 58 und einen unteren Kanal 62 mündet.

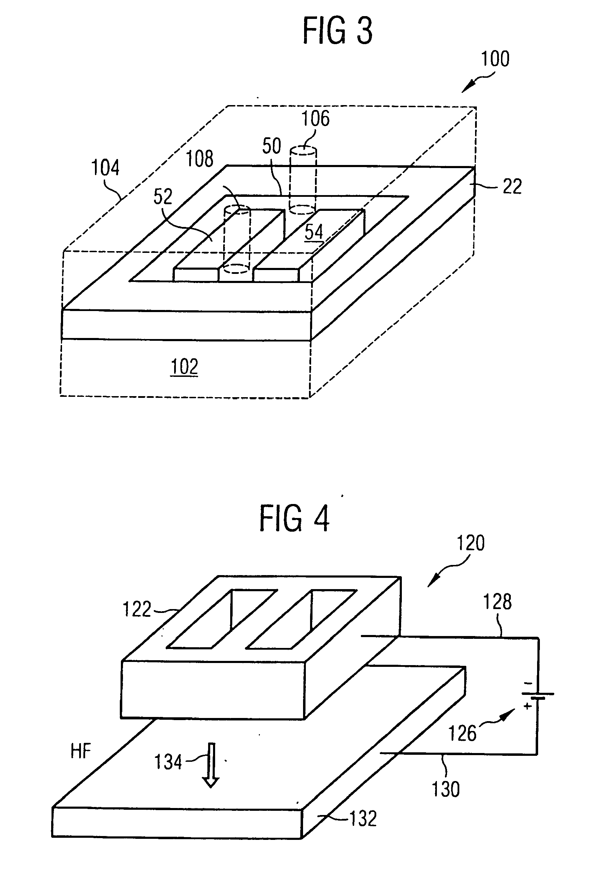

Figur 3 zeigt ein Bauelement 100, das zur Analyse von Flüssigkeiten dient. Das Bauelement 100 enthält auf einer Trägerplatte 102 aus Glas den mit Hilfe der Werkzeugelektrode 12 bearbeiteten Teil der Siliziumscheibe 22. Oberhalb des Teils der Siliziumscheibe 22 befindet sich eine Abdeckplatte 104, die ebenfalls aus Glas besteht. Trägerplatte 102, Siliziumscheibe 22 und Abdeckplatte 104 sind miteinander verklebt.

Die Abdeckplatte 104 wird im Bereich der quaderförmigen Aussparung 50 durch einen Einlasskanal 106 zum Einlassen der zu analysierenden Flüssigkeit und durch einen Auslasskanal 108 zum Auslassen der zu analysierenden Flüssigkeit aus dem quaderförmigen Aussparung 50 durchsetzt.

Bei einem anderen Ausführungsbeispiel des Bauelementes 100 gibt es keine quaderförmigen Inseln 52 und 54 innerhalb der quaderförmigen Aussparung 50. Außerdem wird die gesamte Siliziumscheibe 22 durch die quaderförmige Aussparung 50 durchsetzt.

Figur 4 zeigt das Prinzip einer Anlage 120 zum elektrochemischen Formabtragen. Die Anlage 120 enthält eine Werkzeugelektrode 122 und eine Gleichspannungsquelle 126. Der Minuspol der Gleichspannungsquelle 126 ist über eine Leitung 128 mit der Werkzeugelektrode 122 verbunden. Der Pluspol der Gleichspannungsquelle 126 ist über eine Leitung 130 mit einer Siliziumscheibe 132 verbunden, die auf einem nicht dargestellten Werkzeugtisch der Anlage 120 ruht.

Die Werkzeugelektrode 122 hat die gleiche Form wie die Werkzeugelektrode 12 und besteht ebenfalls aus Kupfer. Die Werkzeugelektrode 122 wird durch eine nicht dargestellte Vorschubvorrichtung der Anlage 120 während des Abtragens kontinuierlich auf die Siliziumscheibe 132 zu bewegt, siehe Pfeil 134. Zwischen der Werkzeugelektrode 122 und der Siliziumscheibe 132 befindet sich ein Elektrolyt, nämlich Flusssäure (HF).

Ein Elektrolytkreislauf der Anlage 120 ist in Figur 4 nicht dargestellt. Der Elektrolytkreislauf enthält eine Filtereinheit, eine Pumpeinrichtung und eine Kühlung.

Mit Hilfe der Anlage 120 lässt sich die Siliziumscheibe 132 auf ähnliche Art und Weise bearbeiten wie die Siliziumscheibe 22 mit Hilfe der Funkenerosionsanlage 10. Nach dem Bearbeiten wird die Siliziumscheibe 132 zerschnitten und es wird ein Bauelement hergestellt, das den gleichen Aufbau wie das Bauelement 100 hat.

## Patentansprüche

1. Verfahren zum Herstellen einer Mikrostruktur (100),
bei dem aus einem Werkstück (22, 132) auf Halbleiterbasis mindestens ein Bereich (50) abgetragen wird,
wobei zum Abtragen des Bereiches (50) ein funkenerosives Verfahren oder ein elektrochemisches Formabtragungsverfahren eingesetzt wird,
**dadurch gekennzeichnet, dass** das Verfahren zum Herstellen eines Bauelementes (100) für die Analyse chemischer oder biologischer Proben verwendet wird,
wobei das Bauelement (100) einen Kanal enthält,
wobei das Bauelement (100) eine Schicht (22) auf Halbleiter basis enthält, aus der mindestens ein Bereich (50) durch das funkenerosive Verfahren oder das elektrochemische Formabtragungsverfahren abgetragen worden ist,
und wobei mindestens eine Abmessung des Bereiches (50) kleiner als 10 µm ist.

2. Verfahren nach Anspruch 1, **dadurch gekennzeichnet, dass** mindestens eine Abmessung des Bereiches (50) kleiner als 1 µm ist.

3. Verfahren nach Anspruch 1 oder 2, **dadurch gekennzeichnet, dass** ein Senkverfahren eingesetzt wird, bei dem eine Werkzeugelektrode (12, 120) zu dem Werkstück (22, 132) hin abgesenkt wird.

4. Verfahren nach einem der vorhergehenden Ansprüche, **dadurch gekennzeichnet, dass** die Werkzeugelektrode (12, 122) eine Form hat, deren Abmessungen die Abmessungen des abzutragenden Bereiches vorgeben.

5. Verfahren nach Anspruch 3 oder 4, **dadurch gekennzeichnet, dass** die Werkzeugelektrode (12, 122) in einem Ätzprozess gefertigt worden ist.

6. Verfahren nach einem der Ansprüche 3 bis 5, **dadurch gekennzeichnet, dass** die Werkzeugelektrode (12, 122) mindestens einen Hohlraum (16, 18) enthält, der einen nicht-abzutragenden Bereich des Werkstücks (22, 132) vorgibt.

7. Verfahren nach einem der Ansprüche 3 bis 6, **dadurch gekennzeichnet, dass** die Werkzeugelektrode (12, 122) Graphit oder nicht-rostenden Stahl oder Kupfer oder eine Kupferlegierung enthält.

8. Verfahren nach einem der vorhergehenden Ansprüche, **dadurch gekennzeichnet, dass** das Halbleitermaterial dotiert ist und eine niederohmige Leitfähigkeit bezogen auf die Einheit Ohm pro Zentimeter hat.

9. Verfahren nach einem der vorhergehenden Ansprüche, **dadurch gekennzeichnet, dass** das Werkstück (22, 132) eine Halbleiterscheibe ist.

10. Verfahren nach einem der vorhergehenden Ansprüche, **dadurch gekennzeichnet, dass** das Werkstück auf Siliziumbasis hergestellt wird.

11. Verwendung des Verfahrens nach einem der vorhergehenden Ansprüche,
wobei das Bauelement (100) eine Pumpe und/oder ein Ventil enthält.

12. Verfahren nach Patentanspruch 3, **dadurch gekennzeichnet, dass** das Senkverfahren ein zyklisches Verfahren ist, bei dem die Werkzeugelektrode zyklisch abgesenkt und wieder entfernt wird.

## Claims

1. Method for producing a microstructure (100),
in which at least one region (50) is removed from a semiconductor-based workpiece (22, 132),
a spark-erosive method or an electrochemical shaping removal method being used for removing the region (50),
**characterized in that** the method is used for producing a component (100) for the analysis of chemical or biological samples,
the component (100) containing a channel,
the component (100) containing a semiconductor-based layer (22), from which at least one region (50) has been removed by the spark-erosive method or the electrochemical shaping removal method,
and at least one dimension of the region (50) being less than 10 µm.

2. Method according to Claim 1, **characterized in that** at least one dimension of the region (50) is less than 1 µm

3. Method according to Claim 1 or 2, **characterized in that** a lowering method is used in which a tool electrode (12, 120) is lowered towards the workpiece (22, 132).

4. Method according to one of the preceding claims, **characterized in that** the tool electrode (12, 122) has a shape whose dimensions predefine the dimensions of the region to be removed.

5. Method according to Claim 3 or 4, **characterized in that** the tool electrode (12, 122) has been fabricated in an etching process.

6. Method according to one of Claims 3 to 5, **characterized in that** the tool electrode (12, 122) contains at least one cavity (16, 18) which predefines a region of the workpiece (22, 132) that is not to be removed.

7. Method according to one of Claims 3 to 6, **characterized in that** the tool electrode (12, 122) contains graphite or stainless steel or copper or a copper alloy.

8. Method according to one of the preceding claims, **characterized in that** the semiconductor material is doped and has a low-resistance conductivity relative to the unit ohm per centimetre.

9. Method according to one of the preceding claims, **characterized in that** the workpiece (22, 132) is a semiconductor wafer.

10. Method according to one of the preceding claims, **characterized in that** the workpiece is produced on a silicon basis.

11. Use of the method according to one of the preceding claims,
the component (100) containing a pump and/or a valve.

12. Method according to Patent Claim 3, **characterized in that** the lowering method is a cyclic method in which the tool electrode is cyclically lowered and removed again.

## Revendications

1. Procédé pour produire une microstructure (100), dans lequel on enlève au moins une zone (50) d'une pièce à usiner (22, 132) à base de semi-conducteur
en utilisant pour enlever la zone (50) un procédé d'érosion par étincelle ou un procédé électrochimique d'enlèvement de forme,
**caractérisé en ce qu'**on utilise le procédé pour produire un composant (100) pour l'analyse d'échantillons chimiques ou biologiques,
le composant (100) ayant un canal,
le composant (100) ayant une couche (22) à base de semi-conducteur dans laquelle au moins une zone (50) a été enlevée par le procédé d'érosion par étincelle ou par le procédé électrochimique d'enlèvement de forme
et au moins une dimension de la zone (50) est inférieure à 10 µm.

2. Procédé selon la revendication 1, **caractérisé en ce qu'**au moins une dimension de la zone (50) est inférieure à 1 µm.

3. Procédé selon la revendication 1 ou 2, **caractérisé en ce qu'**on utilise un procédé d'enfoncement, dans lequel une électrode outil (12, 120) est abaissée vers la pièce à usiner (22, 132).

4. Procédé selon l'une des revendications précédentes, **caractérisé en ce que** l'électrode outil (12, 122) a une forme dont les dimensions prédéfinissent les dimensions de la zone à enlever.

5. Procédé selon la revendication 3 ou 4, **caractérisé en ce que** l'électrode outil (12, 120) a été produite par une opération de gravure.

6. Procédé selon l'une des revendications 3 à 5, **caractérisé en ce que** l'électrode outil (12, 122) comporte au moins un creux (16, 18) qui prédéfinit une zone de la pièce à usiner (22, 132) à ne pas enlever.

7. Procédé selon l'une des revendications 3 à 6, **caractérisé en ce que** l'électrode outil (12, 122) contient du graphite ou un acier inoxydable ou du cuivre ou un alliage de cuivre.

8. Procédé selon l'une des revendications précédentes, **caractérisé en ce que** le matériau semi-conducteur est dopé et qu'il a une conductibilité de petite valeur ohmique si on se réfère à l'unité ohm par centimètre.

9. Procédé selon l'une des revendications précédentes, **caractérisé en ce que** la pièce à usiner (22, 132) est une tranche de semi-conducteur.

10. Procédé selon l'une des revendications précédentes, **caractérisé en ce que** la pièce à usiner est fabriquée à base de silicium.

11. Utilisation du procédé selon l'une des revendications précédentes, **caractérisé en ce que** le composant (100) comporte une pompe et/ou une soupape.

12. Procédé selon la revendication 3, **caractérisé en ce que** le procédé d'enfoncement est un procédé cyclique dans lequel l'électrode outil est cycliquement enfoncée et de nouveau éloignée.
